# EUROPEAN PATENT APPLICATION

(11) **EP 4 552 892 A1**
(43) Date of publication of application: **14.05.2025**
(21) Application number: 23208559.7
(22) Date of filing: 08.11.2023
(51) Int. Cl.: B60K 35/10, B60R 11/00

(54) **OPERATING UNIT FOR CONTROLLING A FUNCTION OF A MACHINE**

(71) Applicant: elobau GmbH & Co. KG, 88299 Leutkirch im Allgäu (DE)
(72) Inventor: Rottach, Andreas, 87452 Altusried (DE); Schröck, Georg, 87764 Legau (DE); Caliebe, Simon, 88316 Isny (DE)
(74) Representative: Knöner, Gregor

(57) **Abstract**

An operating unit (10) for controlling a function of a machine, in particular of a vehicle, is provided. The operating unit (10) comprises: an operating module (12) comprising one or more operating elements (14); and a driving mechanism (16). The operating module (12) and the driving mechanism (16) are configured to be arranged in a recess (20) of the machine, and the driving mechanism (16) is controllable to move the operating module (12) at least from a retracted position (P0) in which at least one operating element (14b, 14c) of the operating module (12) is positioned within the recess (20) to an extended position (P1, P2, P3) in which the at least one operating element (14b, 14c) of the operating module (12) is located outside of the recess (20).

## Description

### FIELD OF THE INVENTION

The present application relates to an operating unit for controlling a function of a machine and to a method of operating an operating unit for controlling a function of a machine.

### BACKGROUND

User interfaces of machines, such as vehicles, are becoming more and more compact, which reduces the space available for the placement of operating elements within the machines. In addition, the number of operating elements continues to increase. On the one hand, the small available space within the machine makes placement of operating elements more difficult, and on the other hand, the large selection of operating elements makes it more complicated and confusing for the user to operate the machine.

### SUMMARY

Accordingly, there is a need to mitigate at least some of the drawbacks mentioned above and to provide an operating unit that occupies little space and simplifies the operation of the machine for a user.

This need is met by the features of the independent claims. The dependent claims describe embodiments of the invention.

According to an embodiment of the invention, an operating unit for controlling a function of a machine, in particular of a vehicle, e.g. an agricultural or construction vehicle, such as a tractor or harvester, is provided. The operating unit comprises: an operating module comprising one or more operating elements; and a driving mechanism. The operating module and the driving mechanism are configured to be arranged in a recess of the machine, and the driving mechanism is controllable to move the operating module at least from a retracted position in which at least one operating element of the operating module is positioned within the recess to an extended position in which the at least one operating element of the operating module is located outside of the recess.

The space available in machines and vehicles is becoming increasingly limited. With the claimed solution, the available space in the machine, in particular in the vehicle can be used more efficiently. The operating unit may be arranged in a recess that is already present in the machine or specifically provided for this purpose. Preferably, the recess is an armrest of the machine.

In addition, by moving the operating module between the retracted position and the extended position by means of the driving mechanism, the operating unit allows only specific operating elements to be available to the user. I.e. in the extended position, operating elements are positioned outside the recess, which are positioned inside the recess in the retracted position. In particular, the operating unit is configured in such a way that, depending on an obtained (e.g. selected) operation mode of the machine, the operating module is moved to the retracted position or to the extended position. The fact that not all operating elements are always positioned outside the recess and are thus available to the user simplifies the operability of the operating unit and its operating elements. In particular, only those operating elements are positioned outside the recess that are currently required, i.e. for a selected operation mode. The user is therefore not confused by a plurality operating elements that are not needed for the current operation mode.

An operating element is preferably an element that, when actuated, causes a specific function in the machine to be executed. Preferably, the operating unit has a controller that is connected to the operating module, and in particular to the operating elements, and is configured to control/execute a function of the vehicle when an operating element is actuated. For example, an operating element can be a knob, in particular a rotary knob, a lever, a slider, a switch, or the like.

Operating elements positioned or located outside of the recess may mean that the operating element is external to the recess and is accessible and operable by a user.

Operating elements positioned or located within the recess preferably means that said operating elements are not accessible by the user and thus are not operable.

In the retracted position, all operating elements may be positioned within the recess (except operating elements optionally arranged on a cover element of the operating module as described below). In a fully extended position, all operating elements may be positioned outside the recess.

The recess preferably has an opening. The operating elements may be positioned inside or outside of the opening depending on the position of the operating module. Preferably the opening of the recess is adapted to the outer shape of the operating module.

The opening may be on a side surface, e.g. on a top surface or a vertical surface. The operating module is preferably movable in a (substantially) vertical or (substantially) horizontal direction.

Preferably the driving mechanism is controllable to move the operating module to at least one intermediate position between the retracted position and the extended position, and wherein in the at least one intermediate position, at least one operating element is positioned outside of the recess which in the retracted position is positioned inside of the recess, and wherein in the extended position at least one operating element more is positioned outside of the recess than in the at least one intermediate position.

The at least one intermediate position may also be referred to as "at least one first extended position" and the extended position may also be referred to as "a fully extended position".

The at least one intermediate position may comprise a first intermediate position and a second intermediate position, wherein the second intermediate position is positioned between the first intermediate position and the extended position, wherein in the second intermediate position at least one operating element more than in the first intermediate position and at least one operating element less than in the extended position are located outside of the recess. The first intermediate may also be referred to as "a first extended position", the second intermediate position may also be referred to as "a second extended position" and the extended position may also be referred to as "a fully extended position" of the operating module.

The fact that not all operating elements are always positioned outside the recess and are thus available to the user simplifies the operability of the operating unit and its operating elements. In particular, only those operating elements are positioned outside the recess that are currently required, i.e. for an obtained operation mode. The user is therefore not confused by operating elements positioned outside the recess that are not needed for the current operation mode.

Preferably, the first intermediate position is positioned between the retracted position and the second intermediate position, and the second intermediate position is positioned between the first intermediate position and the fully extended position.

If for example a third intermediate position is provided, the third intermediate position may be positioned between the second intermediate position and the fully extended position.

The travel length of the operating module, for example a vertical or horizontal distance, between two adjacent positions may be equal or may be different.

Preferably, the operating unit comprises a cover element, wherein the cover element is configured to cover (close) in the retracted position an opening of the recess. Preferably, the operating module comprises the cover element which is arranged at an end section thereof, or the operating unit comprises the cover element configured to be arranged at the opening of the recess, e.g. as part of an armrest.

In the retracted position, the cover element protects the inside of the recess from dirt and other contaminants and prevents damage to the driving mechanism and/or the operating module.

In case the cover element is arranged on the operating module, the controller may be configured to move the operating module to the retracted position, wherein the cover element arranged at the operating module covers (closes) the opening of the recess. I.e. in the retracted position, the opening of the recess may be covered by the operating module itself. In the retracted position at least one operating element arranged on the cover element may be positioned outside of the recess.

Alternatively, in the retracted position none of the operating elements may be positioned outside of the recess, i.e. all operating elements of the operating module are positioned within the recess. For example, if none of the operating elements of the operating module is required in a selected operation mode, the operating module is retractable into the recess such that no operating elements are located outside the recess of the machine.

In case the cover element is comprised in the operating unit and is arranged at the opening of the recess (i.e. not on the operating module), the controller may be configured to move the operating module to the retracted position, and to move the cover element arranged at the opening of the recess such that the recess is closed by the cover element.

The cover element simplifies the operability because the user does not have access to operating elements that are not currently needed. In addition, the operating module does not occupy any space in the machine, i.e. outside of the recess, which means that the user has more space within the machine. If the operating unit is arranged in an armrest, the armrest may be used to rest the arm when the operating module is in the retracted position.

If intermediate positions are provided, the operating module may comprise at least one intermediate cover element which is configured to close the opening of the recess in the at least one intermediate position. Preferably, the operating module comprises one intermediate cover element for each intermediate position. For example, the operating module may comprise a first intermediate cover element which is configured to close the opening of the recess in the first intermediate position. Additionally or alternatively, the operating module may comprise a second intermediate cover element (close) which is configured to close the opening of the recess in the second intermediate position.

The operating module may comprise an end cover element which is configured to close the opening of the recess in the (fully) extended position.

The first intermediate cover element may be positioned between the end cover element and the second intermediate cover element. The second intermediate cover may be positioned between the first intermediate cover element and the cover element.

In the at least one intermediate position, the at least one intermediate cover element (and in the extended position, the end cover element) protects the inside of the recess from dirt and other contaminants and prevents damage to the driving mechanism and/or the operating module of the operating unit.

Preferably, the one or more operating elements comprise at least a joystick having a base and a handle movably connected to the base, and wherein in the extended position of the operating module, the joystick is positioned at least partially outside of the recess such that the handle is pivotable in at least one direction.

In particular, in the retracted position, the joystick is positioned within the recess such that the handle is not pivotable, and in the extended position the joystick is positioned at least partially outside of the recess such that the handle is pivotable in the at least one direction.

Preferably, the handle is pivotable in at least two directions that are perpendicular to each other. The handle of the joystick may be cylindrical.

At least some operating elements may be arranged on the handle of the joystick.

The joystick may comprise further operating elements which are arranged on the base of the joystick (i.e. not on the handle). The operating elements on the handle and optionally on the base are preferably positioned outside of the recess in the extended position of the operating module.

If pivoting of the joystick in the at least one direction is not required in an obtained operation mode of the machine, the part of the joystick that enables the pivoting is preferably positioned within the recess such that the handle is not pivotable.

The above mentioned end cover element, which is configured to close the opening of the recess in the extended position of the operating module, may be comprised or formed at least partially by the base of the joystick.

Preferably, the handle comprises at least one or two operating elements, such as rotary knobs. A first of said operating elements, which is arranged within the recess in the retracted position, may be positioned outside of the recess in a first intermediate position. Optionally, a second of said operating elements, which is arranged within the recess in the first intermediate position, may be positioned outside of the recess in a second intermediate position.

Preferably, the first and/or second intermediate cover element is/are arranged on the handle of the joystick. Preferably, the first operating element (e.g. a rotary knob) is positioned between the first intermediate cover element and the second operating element (e.g. a rotary knob) (or the second intermediate cover element). The second operating element (e.g. a rotary knob) may be positioned between the first operating element (or the first intermediate cover element) and the second intermediate cover element.

The first and/or the second rotary knob may be rotatable around a rotation axis which corresponds to a longitudinal axis of the handle.

Preferably, the cover element covers an end section of the handle. Optionally, at least one of the operating elements is arranged on the cover element. In the retracted position of the operating module, the at least one operating element arranged on the cover element may be positioned outside of the recess.

More preferably, in the retracted position of the operating module, only the at least one operating element arranged on the cover element is positioned outside of the recess.

Preferably the operating unit comprises a controller, wherein the controller is configured to control the driving mechanism to move the operating module selectively at least between the retracted position and the extended position.

If the at least one intermediate position is provided, the controller is configured to control the driving mechanism to move the operating module between the retracted position, the at least one intermediate position and the extend position. Preferably, the controller is configured to control the driving mechanism to move the operating module to any intermediate position between the retracted position and the extended position.

Preferably the controller is configured to obtain an operation mode of the machine and to move the operating module to at least the retracted position, optionally the at least one intermediate position (if provided), or the (fully) extended position in dependence on the obtained operation mode.

The controller may obtain the operation mode from input via a user input or from a superordinate controller of the machine. For example, the operation mode may be selected by the user by actuating a control element.

By positioning different operating elements outside of the recess depending on the obtained operation mode, it is clear to the user which operating elements are relevant for the obtained operation mode. Thus, the operability of the machine is simplified and the user is not confused by operating elements which are not relevant for the current operation mode.

For example, when a first operation mode is obtained, the controller may be configured to move the operating module to the retracted position, and when a second operation mode being different from the first operation mode is obtained, the controller may be configured to move the operating module to the extended position.

If the at least one intermediate position, in particular the first and second intermediate positions are provided, when a third operation mode is obtained, the controller may be configured to move the operating module to the first intermediate position and/or if a fourth operation mode is obtained, the controller may be configured to move the operating module to the second intermediate position.

For example, the controller may obtain a first operation mode, such as upon uncoupling or coupling of a device to the machine, and the controller may be configured to move the operating module to any of the retracted, an intermediate positions (if provided), or the (fully) extended position, in response to the obtained first operation mode. Further, the controller may obtain a second operation mode, such as a mode for operating a component of the machine, and the controller may be configured to move, in response to the obtained second operation mode, the operating module to a position different from the position to which the operating module had been moved in response to the first operation mode. If the operating elements comprise the joystick, the joystick may be used in the first operation mode to move the machine or to operate the device coupled to the machine, wherein in the second operation mode the joystick is positioned inside the recess and is not accessible by the user.

Preferably, the operating unit comprises a position detection arrangement configured to detect, for example contactless, the current (absolute) position of the operating module and to transmit a position signal indicative of the detected position to a or the controller.

The position detection arrangement may detect the current position of the operating module in a direction of the movement of the operating module. The direction of movement of the operating module may be vertical, horizontal or in any direction in between. Preferably, the direction of movement is vertical or substantially vertical.

The position detection arrangement may comprise a position sensor which is arranged either on the operating module or within the recess. The position detection arrangement may be configured to detect the absolute position of the operating module within the recess. Preferably, the position detection arrangement comprises an inductive sensor, an optical sensor, or a resistive sensor for detecting the current position of the operating module.

Preferably, the controller is configured to move, in dependence on the detected position signal, the operating module to the retracted position, the extended position or the at least one intermediate position. The controller may use feedback from the position sensor to bring the operating module to a respective predefined absolute position. A predefined absolute position may be assigned to each of the retracted position, the at least one intermediate position (if provided), and the (fully) extended position of the operating module. Preferably, each of the positions of the operating module, i.e. the retracted position, the extended position or the at least one intermediate position, corresponds to a specific absolute position.

This allows the various positions of the operating module to be approached with high precision. When for example the machine is switched off and switched on again, the position detection arrangement can detect the current position of the operating module and based on the current position, the controller can move the operating module to a specific position corresponding to one of the retracted position, the extended position or optionally the at least one intermediate position.

Preferably the driving mechanism comprises a guiding arrangement adapted to guide the operating module between the retracted position and the extended position. More preferably, the guiding arrangement comprises at least two guiding elements which, in a mounted state, extend (substantially) parallel to a direction of movement of the operating module.

Preferably the operating module comprises rolling or sliding elements attached to the operating module, wherein the rolling or sliding elements are received by the guiding arrangement, wherein the rolling or sliding elements are movably arranged on the guiding arrangement, and wherein the operating module is movable from the retracted position to the extended position (or to any intermediate position in between) by moving of the rolling or sliding elements on the guiding arrangement.

The rolling or sliding elements can be at least partially enclosed by the guiding elements (e.g. guide rails), or the rolling or sliding elements enclose the guiding elements or guide rails at least partially from the outside. Rolling elements can, for example, be rollers that roll on the guiding elements during movement. Sliding elements can be elements that slide on the guiding elements during movement. In contrast to the rolling elements, the sliding elements do not roll on the guiding elements, i.e. the sliding elements are preferably immovable elements that can slide on a rigid guiding elements.

The operating module is preferably arranged on a support structure and the support structure is movable between the retracted position and the extended position. The rolling or sliding elements are preferably arranged on the support structure so that the support structure is guided in the guiding elements by means of the rolling or sliding elements. The rolling or sliding elements are preferably arranged in edge regions of the operating module or the support structure. Preferably the support structure is a plate element. The base of the joystick may be arranged on or connected to the support structure or the base of the joystick is or forms part of the support structure.

Preferably, the rolling or sliding elements and the driven element are arranged on opposing sides of the support structure.

The guiding arrangement may have at least two guiding elements which are designed as rods, wherein the rolling or sliding elements each are movable on a respective rod. The rolling or sliding elements are configured to (at least partially) enclose the respective rod. In particular, the sliding elements are formed as sheaths which are configured to slide on the respective rods.

Preferably the driving mechanism may comprise an actuator configured to drive the driving mechanism mechanically to move the operating module between the retracted and the extended positions. The actuator may for example be an electric motor, a pneumatic actuator, a hydraulic actuator, a hydraulic piston, a hydraulic motor, or the like.

The driving mechanism may comprise a driving element driven by an or the actuator and which is configured to be rotatably supported in the recess (e.g., threaded rod or gear/pinion), and further comprises a driven element arranged on the operating module (e.g., threaded socket or rack), the driving element being in engagement with the driven element such that by operating the actuator, the operating module is movable from the retracted position to the extended position (optionally from the retracted position to the at least one intermediate position and from the at least one intermediate position to the extended position) by means of the driven element.

More preferably the driving element is a threaded rod or a toothed gear and the driven element is a threaded socket or a toothed rack, respectively.

The threaded rod may have a trapezoid thread or may be a recirculating ball screw.

The rotation axis of the threaded rod or the extension of the toothed rack is preferably aligned parallel to the guide elements.

Preferably the driving mechanism comprises a transmission assembly arranged within the recess and being configured to transmit a torque from a or the actuator to the operating module. The transmission assembly may comprise a first gear rotatably connected to the actuator and a second gear rotatably connected to the driving element (e.g. threaded rod or gear/pinion), the first gear being in engagement with the second gear such that by operating the actuator, the operating module is moved between the retracted position and the extended position by transmission of a torque from the actuator via the first and second gears and the driving element to the driven element of the operating module.

The transmission assembly allows the actuator to be placed next to the driving element, which makes the operating unit more compact as a whole. Thus it is possible to install the operating unit in recesses with limited space. Further, the operating module is movable within a small space.

Preferably, the transmission assembly is configured to provide a reduction of the rotation rate of the actuator. This results in a low torque for moving the drive element, which also means that almost no braking torque is required when a force (e.g. a force when the user operates the operating module) is applied to the operating module in the direction of movement of the operating module.

The driving mechanism may be self-retaining and/or may be backlash-free.

Preferably, if no drive torque is applied to the driving mechanism, i.e. if the operating module is in a resting state, the operating module remains in its current position and does not move even if a force is applied to the operating module in the movement direction of the operating module, for example a force applied by a user. This preferably also applies when the machine and thus the operating unit is switched off.

The holding force of the driving mechanism, i.e. the force that must be applied to move the operating module, is preferably greater than the usual forces (abusive uses are excluded) exerted by the user on the operating module or its operating elements. This ensures that the operating module does not change its position when used by the user, which enables reliable operation of the machine by means of the operating unit.

According to a further embodiment of the present invention, a machine, such as a mobile machine, in particular an agricultural vehicle, construction vehicle, or industrial vehicle, is provided. The machine comprises a recess having any configuration described herein and an operating unit having any of the configurations described herein, wherein the operating unit is mounted to or arranged in the recess.

According to a further embodiment of the present invention, a method of operating an operating unit for controlling a function of a machine, in particular an operating unit as described herein is provided. The operating unit comprises: an operating module comprising one or more operating elements; and a driving mechanism; wherein the operating module and the driving mechanism are arranged in a recess of the machine. The method comprises moving, by means of the driving mechanism, the operating module from a retracted position in which at least one operating element of the operating module is positioned within the recess to an extended position in which the at least one operating element of the operating module is located outside of the recess.

The method may further comprise moving the operating module from the retracted position or the extended position to any intermediate position (as described above) between the retracted position and the extended position. Moving the operating module may occur in dependence on an obtained operation mode of the machine.

The method may comprise any steps described herein with respect to the operating unit and the machine. Further, the operating unit and the machine may be configured to perform any of the disclosed method steps.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a side view of an operating unit for controlling a function of a machine with an operating module according to an embodiment, wherein the operating module is in a retracted position.
Fig. 2 is a schematic drawing of the operating unit of Fig. 1, wherein the operating module is in a first extended position.
Fig. 3 is a schematic drawing of the operating unit of Fig. 1, wherein the operating module is in a second extended position.
Fig. 4 is a schematic drawing showing a perspective view of an operating unit having an operating module according to an embodiment, wherein the operating module is in a fully extended position.
Fig. 5 is a schematic drawing showing a perspective view of operating elements of an operating module according to an embodiment.
Fig. 6 is a schematic drawing showing a perspective view of an operating module according to an embodiment.
Fig. 7 is a flow diagram illustrating a method of operating an operating unit according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as openended terms (i.e., meaning "including, but not limited to,") unless otherwise noted.

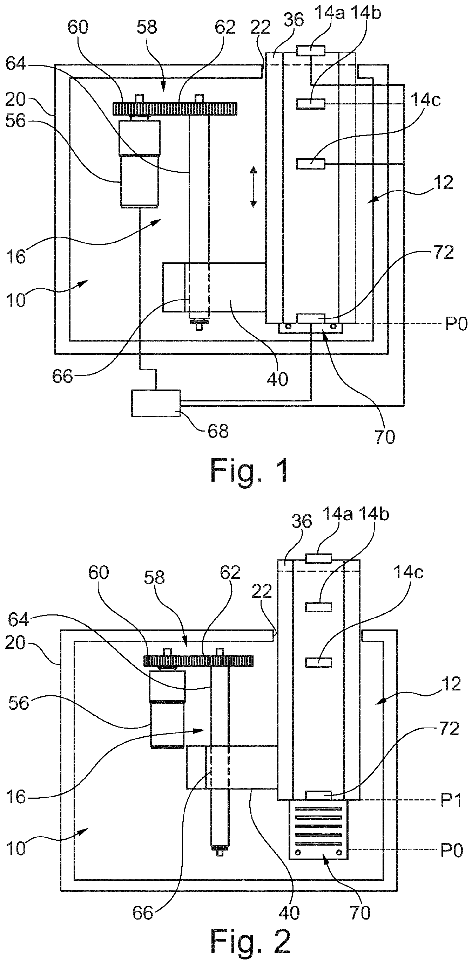

Fig. 1 is a schematic drawing showing a side view of an operating unit 10 for controlling a function of a machine. The operating unit 10 comprises an operating module 12 which comprises one or more operating elements 14a-c, and a driving mechanism 16. As shown in Fig. 1, the operating module 12 and the driving mechanism 16 are configured to be arranged in a recess 20 of the machine.

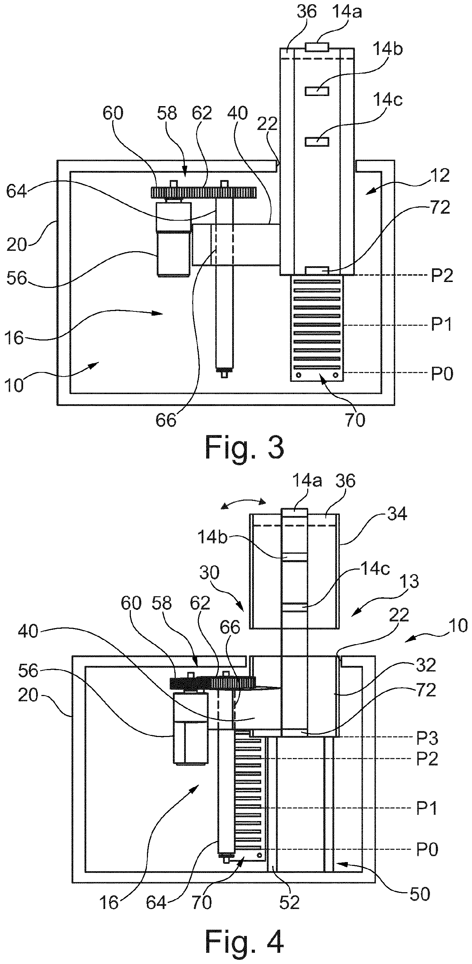

The driving mechanism 16 is controllable to move the operating module 12 at least from a retracted position P0 (as shown in Fig. 1) in which at least one operating element 14b, 14c of the operating module 12 is positioned within the recess 20 to an extended position(s) P1, P2 (see Figs. 2 and 3) in which the at least one operating element 14b, 14c of the operating module 12 is located outside of the recess 20. The movement direction of the operating module 12 is indicated by the arrow in Fig. 1. In particular, the operating module 12 is movable through an opening 22 of the recess 20. Thus, it is possible that only the operating elements 14a-c which are needed for a selected operation mode are positioned outside of the recess 20 and are thus operable by the user. Therefore, the operability for the user is simplified as operating elements which are not relevant for the current operation mode are not accessible (i.e. positioned within the recess) and thus cannot confuse the user when operating the operating module.

For example, and as shown in Figs. 1 to 3, the operating module 12 is preferably movable in a vertical or substantially vertical direction. However, it should be clear that alternatively the operating module 12 may be movable in a horizontal direction or any other direction. For example, the opening 22 of the recess may be arranged on a side surface of the machine part in which the recess is provided. Irrespective of the movement direction of the operating module 12, in each extended position at least one more operating element is positioned outside of the recess 20 than in the previous extended position or retracted position.

The driving mechanism 16 may comprise a guiding arrangement 50 (shown exemplarily in the embodiment of Fig. 4) adapted to guide the operating module 12 from the retracted position P0 to the extended position(s) P 1, P2. The guiding arrangement 50 may comprise at least two guiding elements 52 which, in a mounted state, extend parallel or substantially parallel to a direction of movement of the operating module 12. For example, the guiding elements 52 extend vertically from a bottom of the recess to a top region of the recess 20. The driving mechanism 16 preferably comprises a driving element 64 (e.g. a threaded rod) driven by an actuator 56 (e.g. an electric motor) and which is configured to be rotatably supported in the recess 20. The driving mechanism 16 may further comprise a driven element 66 (e.g. a threaded socket) arranged on the operating module 12, wherein the driving element 64 is in engagement with the driven element 66 such that by operating the actuator 56, the operating module 12 is movable from the retracted position P0 to the extended position(s) P 1, P2 by means of the driven element 66.

The driving mechanism 16 may further comprise a transmission assembly 58 arranged within the recess 20 and being configured to transmit a torque from the actuator 56 to the operating module. The transmission assembly 58 may comprise a first gear 60 rotatably connected to the actuator 56 and a second gear 62 rotatably connected to the threaded rod 64, the first gear 60 being in engagement with the second gear 62 such that by operating the actuator 56, the operating module 12 is moved between the retracted position P0 and the extended position(s) P1, P2 by transmission of a torque from the actuator via the first and second gears 60, 62 and the driving element 64 to the threaded socket 66 of the operating module. Preferably the driving mechanism 16 is self-retaining and/or is backlash-free. Thus, the operating module 12 remains in its position when a force, e.g. exerted by a user, is applied in the movement direction of the operating module 12.

The operating module 12 may comprise a support structure 40 which is movable by actuation of the threaded rod 64. The support structure 40 may be a plate element. Preferably, the driven element 66 (e.g. the threaded socket) is comprised in the support structure 40 as shown in Fig. 1. Preferably the support structure 40 comprises rolling or sliding elements (not shown), wherein the rolling or sliding elements are received by the guiding arrangement 50, wherein the rolling or sliding elements are movably arranged on the guiding arrangement 50, and wherein the operating module 12 is movable from the retracted position P0 to the extended position P 1, P2 by moving of the rolling or sliding elements on the guiding arrangement 50.

As shown in Fig. 1, the operating module 12 may comprise three operating elements 14a-c, wherein each operating element is arranged at a different vertical position. However the number of operating elements in the same or different vertical positions is arbitrary. In Fig. 1, the operating module 12 is in a retracted position P0 in which the operating elements 14b, 14c are positioned within the recess and the operating element 14a is located outside of the recess. In this position of the operating module 12, only the operating element 14a is accessible and thus operable by a user.

Further, the operating module 12 may comprise a cover element 36 arranged at an end section thereof, wherein the cover element 36 is configured to close in the retracted position P0 which is shown in Fig. 1 the opening 22 of the recess. The operating element 14a may be arranged on the cover element 36 which is located outside of the recess 20 in the retracted position P0. Thus, in the retracted position P0, the cover element 36 protects the inside of the recess from dirt and other contaminants and prevents damage to the driving mechanism 16 and/or the operating module 12.

As shown in Figs. 1 to 3, the operating module 12 is selectively movable by means of the driving mechanism 16 from the retracted position P0 (see Fig. 1) to a first extended position P1 (see Fig. 2) or to a second extended position P2 (see Fig. 3). The first extended position P1 corresponds to an intermediate position of the operating module located between the retracted position P0 and a fully extended position P2.

In the first extended position P1, one more operating elements, namely operating element 14b, is positioned outside of the recess 20 compared to the retracted position P0. The operating element 14b is thus operable by the user.

In the second extended position P2, one more operating elements, namely operating element 14c, is positioned outside of the recess 20 compared to the first extended position P1. The operating element 14c is thus operable by the user.

The operating unit 10 may comprise a controller 68, wherein the controller is configured to control the driving mechanism 16 to move the operating module 12 selectively at least between the retracted position P0 and the first and second extended positions P1, P2. For simplicity, the controller 68 is only shown in Fig. 1 and omitted in Figs. 2 to 4. However, the features of the controller 68 are also applicable to Figs. 2 to 4.

The controller 68 may be configured to obtain an operation mode of the machine from a superordinate controller of the machine or from user input (not shown) and to move the operating module 12 to the retracted position P0 or the first or second extended position P1, P2 in dependence on the obtained operation mode.

The operating unit 10 may comprise a position detection arrangement 70 configured to detect, preferably contactless, the current (absolute) position of the operating module 12, and to transmit a position signal indicative of the detected position to the controller 68. The controller 68 may use feedback from a position sensor 72 of the position detection arrangement 70 to bring the operating module 12 to a respective predefined absolute position, i.e. to move, in dependence on the detected position signal, the operating module 12 to the retracted position P0 or the first or second extended position P1, P2. The sensor 72 may be arranged on the operating module 12 as shown in Fig. 1. However, alternatively, the sensor 72 may be arranged within the recess (i.e. not on the operating module 12).

Thus, the controller 68 is preferably connected to the driving mechanism 16, the operating elements 14a-c and preferably to the position sensor 72.

The controller 68 may be a separate controller (e.g. arranged within the recess) which is connected to receive a user input and/or to a superordinate controller of the machine. Alternatively, the controller 68 may be integrated in or may be formed by a controller of the machine which is arranged external to the recess within the machine.

Fig. 4 is a schematic drawing showing a sectional side view of an operating unit 10 having an operating module 13 according to an embodiment, wherein the operating module 13 is in a fully extended position. The operating unit 10 is similar to the operating unit shown in Figs. 1 to 3, but the operating module 13 is a modification of operating module 12. In the following, only the differences of the operating module 13 are described. All other features described with respect to the embodiment of Figs. 1 to 3 are also applicable to the embodiment shown in Fig. 4.

Similar to the operating module 12 shown in Figs. 1 to 3, the operating module 13 shown in Fig. 4 comprises three operating elements 14a-c which are arranged at different, e.g. vertical, positions. However the number of operating elements in the same or different vertical positions is arbitrary. In contrast to the operating module 12 shown in Figs. 1 to 3, the operating module 13 shown in Fig. 4 comprises a further operating element, namely a joystick 30. The joystick 30 comprises a base 32 and a handle 34 which is movably connected to the base 32. As shown in Fig. 4, the operating elements 14a-c are arranged on the handle 34 of the joystick 30.

For example, the operating module 13 may only comprise the joystick 30 (i.e. the operating elements 14a, 14b, 14c are optional and may not be provided), wherein in the retracted position P0 no operating element is positioned outside of the recess 20 and in the fully extended position the joystick 30 is positioned outside of the recess such that the handle 34 is pivotable in at least one direction (the movement of the handle 34 is indicated by arrows). In another example, the operating module 13 may comprise the joystick 30 and the operating element 14a (i.e. the operating elements 14b, 14c are optional and may not be provided), wherein in the retracted position P0 only the operating element 14a is positioned outside of the recess and in the fully extended position the operating element 14a and the joystick 30 are positioned outside of the recess such that the handle 34 is pivotable in at least one direction.

The base 32 is preferably arranged on the support structure 40 or the base 32 forms or comprises the support structure 40 which is movable by means of the driving element 64.

The cover element 36 of the operating module 13 may cover an end section of the handle 34. The operating element 14a may be arranged on the cover element 36. The cover element 36 may be configured to cover in the retracted position P0 the opening 22 of the recess. Thus, in the retracted position P0, the cover element 36 protects the inside of the recess from dirt and other contaminants and prevents damage to the driving mechanism 16 and/or the operating module 12.

The driving mechanism 16 is preferably controllable to move the operating module 13 from a retracted position P0 in which the operating elements 14b, 14c and the joystick 30 of the operating module 12 are positioned within the recess 20 to at least one extended position P1, P2, P3 in which one more of the operating elements 14b, 14c and/or the joystick 30 is located outside of the recess 20.

Fig. 4 shows a fully extended position P3 of the operating module 13, but the other positions P0, P 1, P2 of the operating module 13 which are indicated in Fig. 4 are not shown. However, the positions P0, P 1, P2 correspond to the positions P0, P1, P2 of the operating module 12 shown in Figs. 1 to 3 such that reference is made to the features described with respect to the embodiment shown in Figs. 1 to 3.

For example, in the retracted position P0, the operating elements 14b, 14c and the joystick 30 are positioned within the recess 20. In this position, the operating element 14a arranged on the cover element is located outside of the recess 20 and is thus operable by the user. The operating elements 14b, 14c, and the joystick 30 positioned within the recess 20 are not accessible/operable by the user.

In the first extended position P1 (corresponds to a first intermediate position of the operating module between the retracted position P0 and the fully extended position P3), the operating element 14b, is positioned outside of the recess 20 compared to the retracted position P0. The operating element 14b is thus operable by the user. The operating element 14c and the joystick 30 (partly) positioned within the recess 20 are not accessible/operable by the user.

In the second extended position P2 (corresponds to a second intermediate position of the operating module between the retracted position P0 and the fully extended position P3), operating element 14c is positioned outside of the recess 20 compared to the first extended position P1. The operating element 14c is thus operable by the user. The joystick 30 (partly) positioned within the recess 20 is not accessible/operable by the user.

In the third extended position P3 (corresponds to a fully extended position of the operating module), the handle of the joystick 30 is positioned outside of the recess 20 such that the handle 34 of the joystick is pivotable in at least one direction. The joystick 30 is thus operable by the user. In this position, all operating elements 14a-c and the handle 34 of the joystick are located outside of the recess 20 and are thus accessible/operable by the user.

The controller may be configured to control the driving mechanism 16 to move the operating module 12 selectively between the retracted position P0 and the first, second and third extended positions P1, P2, P3 (i.e. the first and second intermediate position and the fully extended position), in particular in dependence on an obtained operation mode.

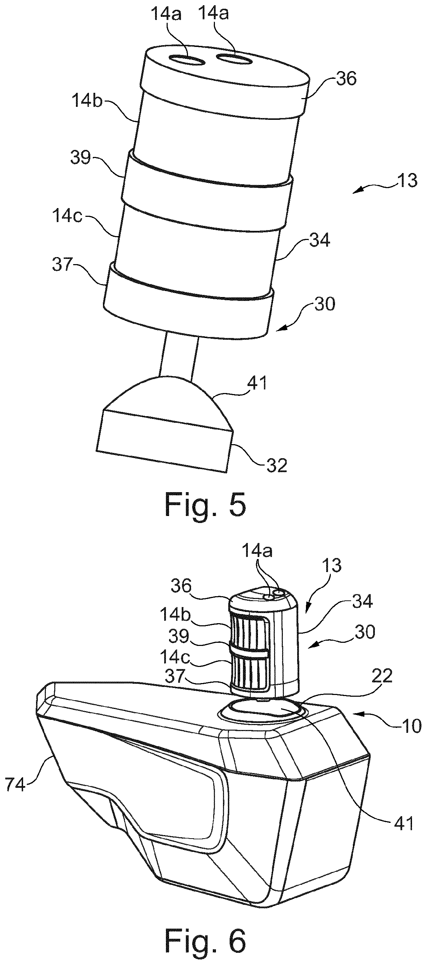

Fig. 5 is a schematic drawing showing a perspective view of operating elements of an operating module according to an embodiment. The operating module 13 comprises the joystick 30 having the handle 34 and the base 32 as described with respect to Fig. 4. The handle 34 is shown cylindrical, but may be shaped ergonomically.

As shown in Fig. 5, the operating elements 14a-c are arranged on the handle 34 of the joystick 30. In particular, the operating element 14a is arranged on the cover element 36 which covers an end section of the handle 34 on a side of the handle 34 opposite to the base 32. The cover element 36 may be configured to cover the opening of the recess in a retracted position P0 of the operating module (see Figs. 1 to 4).

The operating elements 14b, 14c may be formed as rotary knobs, in particular rotary rings, which are arranged on different positions along a longitudinal axis of the handle 34.

In addition to or as an alternative to the cover element 36, one or more cover elements may be provided at the operating module 13.

If intermediate positions are provided, the operating module 13 may comprise at least one intermediate cover element 37, 39 which is configured to close the opening of the recess in the at least one intermediate position. Preferably, the operating module 13 comprises one intermediate cover element 37, 39 for each intermediate position.

A first intermediate cover element 37 may be arranged on the handle 34, wherein preferably the first intermediate cover element 37 is arranged on an end section of the handle 34 opposite to the cover element 36. The first intermediate cover element 37 may also cover said end section. The first intermediate cover element 37 may be configured to close the opening 22 of the recess in the first intermediate position P1 of the operating module (see Fig. 2).

A second intermediate cover element 39 may be arranged on the handle 34, wherein preferably the second intermediate cover element 39 is arranged between the operating elements 14b, 14c (and thus between the cover element 36 and the first intermediate cover element 37). The second intermediate cover element 39 may be configured to close the opening 22 of the recess in the second intermediate position P2 of the operating module.

An end cover element 41 may be arranged on the base 32 of the joystick 30, wherein preferably the end cover element 41 is arranged on a side of the base 32 which faces the handle 34 and in particular the first intermediate cover element 37. The end cover element 41 may be configured to close the opening 22 of the recess in the fully extended position P3 of the operating module (see Fig. 4 or 6). Preferably, the end cover element 41 is comprised in or formed by the base 32 of the joystick 30.

In the first and second intermediate positions, the intermediate cover elements 37, 39 (and in the fully extended position, the end cover element 41) protect the inside of the recess 20 from dirt and other contaminants and prevents damage to the driving mechanism and/or the operating module of the operating unit.

The intermediate cover elements 37, 39 and the end cover 41 are disclosed with respect to the joystick 30 shown in Figs. 4 and 5. However, it should be clear that these elements are also applicable to the other embodiment shown in Figs. 1 to 3 which does not comprise a joystick. The intermediate cover elements 37, 39 and the end cover 41 may be arranged on the operating module 12 and may have the functions as described above.

In Figures 1 to 4, the recess 20 is shown as a general recess. As shown in Fig. 6, the recess in which the operating unit 10 described herein is arranged may preferably be provided in an armrest 74 of a machine. In particular, in Fig. 6 the operating module 13 is shown in the fully extended position P3.

As shown in Figures 1 to 4, at each different vertical position one the operating module, one operating element 14a-c is arranged. However, it should be clear that also more than one operating element 14a-c can be arranged at any of the different vertical positions. In addition, further operating elements may be placed at other vertical positions. Accordingly, more than the first and second extended positions P1, P2 in Fig. 3 and the first, second and third extended positions P1, P2, P3 in Fig. 4 may be provided.

Preferably, the driving mechanism 16 can move the operating module 12, 13 to any position (e.g. vertical position as shown in Figs. 1 to 4) to which an operating element is assigned, wherein when moving the operating module 12, 13 from the retracted position P0 to the extended position at least one operating element more is positioned outside of the recess 20 than in the retracted position. Thus, it is possible that only the operating elements 14a-c (and/or the joystick 30) which are needed for a selected operation mode are positioned outside of the recess 20 and are thus operable by the user. Therefore, the operability for the user is simplified as operating elements which are not relevant for the current operation mode are not accessible (i.e. positioned within the recess) and thus cannot confuse the user when operating the operating module.

Further, the operating module 12, 13 may be only movable from the retracted position P0 to the fully extended position P3 in the embodiment of Fig. 4 or from the retracted position P0 to the fully extended position P2 in the embodiment of Fig. 3, i.e. there are no intermediate positions between the retracted position and the fully extended position. In this case, in the retracted position P0 at least one of the operating elements is positioned within the recess 20 and in the fully extended position the at least one operating element, preferably all operating elements, positioned in the retracted position P0 within the recess 20 is (are) positioned outside of the recess.

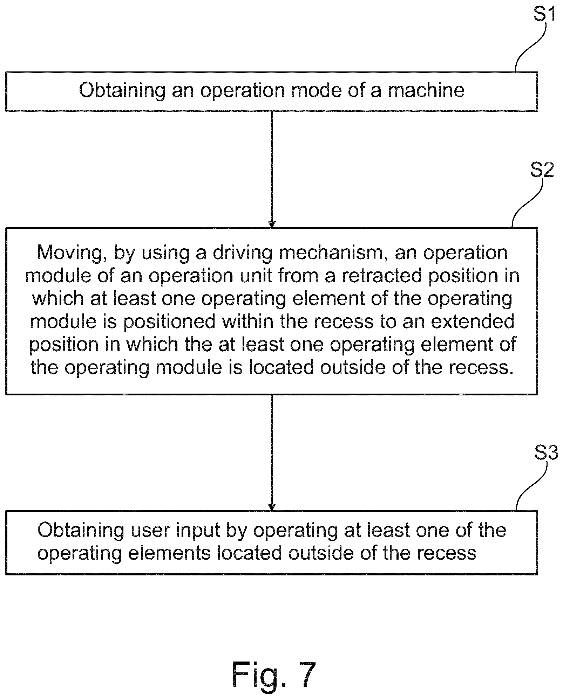

Fig. 7 is a flow diagram illustrating a method of operating an operating unit according to an embodiment.

In a first method step S 1, the controller 68 obtains a first operation mode of the machine. For example, the controller 68 obtains the operation mode from a user input or from a superordinate controller of the machine.

In a second method step S2, the operating module 12, 13 (shown in Figs. 1 to 4) is moved, by means of the driving mechanism, from a retracted position P0 in which at least one operating element of the operating module is positioned within the recess 20 to an extended position (e.g. a first extended position P1) in which the at least one operating element of the operating module is located outside of the recess. Thus, only those operating elements are positioned outside of the recess 20 that are currently required, i.e. for the obtained operation mode. The user is therefore not confused by operating elements positioned outside the recess that are not needed for the current operation mode.

In a third method step S3, the controller 68 may obtain a user input for controlling the machine by operating at least one of the operating elements located outside of the recess. Depending on the user input (i.e. actuating a control element), a specific function of the machine is controlled/executed.

The method may be repeated. For example, the controller 68 may obtain a second operation mode from the user input or from the superordinate controller of the machine. Depending on the second operation mode, the operating module 12, 13 may be moved from the current extended position (e.g. the first extended position P1) to another position, wherein the number of operating elements positioned outside of the recess differs from the number of operating elements outside of the recess in the previous position. For example, the operating module is moved from the (first) extended position to another extended position (e.g. the second or third extended position P2, P3) in which at least one more operating element is positioned outside of the recess than in the previous (first) extended position P1. In another example, the operating module is moved from the (first) extended position P1 to the retracted position P0 in which at least one less operating element is positioned outside of the recess than in the previous extended position
Thus, depending on the first and second operation mode, the operating module is moved to different positions, for example to a first extended position in the first operation mode and to a second extended position in the second operation (i.e. first extended position is positioned between the retracted position and the second extended position). Thus, only the operating elements which are required for the obtained operation mode are located outside of the recess and are thus accessible and operable by the user. However, it should be clear that there may be also different operation modes which lead to a movement of the operating module to the same position such that in said different operation modes the same operating elements may be positioned outside of the recess.

Preferably, when the machine is switched off, the controller 68 is configured to move the operating module 12, 13 automatically to the retracted position P0.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### List of reference signs:

- 10: operating unit
- 12, 13: operating module
- 14a-c: operating element
- 16: driving mechanism
- 20: recess
- 22: opening of recess
- 30: joystick
- 32: base
- 34: handle
- 36: cover element
- 37: first intermediate cover element
- 39: second intermediate cover element
- 40: support structure
- 41: end cover element
- 50: guiding arrangement
- 52: guiding element
- 56: actuator
- 58: transmission assembly
- 60: first gear
- 62: second gear
- 64: threaded rod
- 66: threaded socket
- 68: controller
- 70: position detection arrangement
- 72: sensor
- 74: armrest
- P0: retracted position of operating module
- P1: first extended position of operating module
- P2: second extended position of operating module
- P3: third extended position of operating module
- S1-S3: method step

## Claims

1. Operating unit (10) for controlling a function of a machine, in particular of a vehicle, comprising:
- an operating module (12, 13) comprising one or more operating elements (14a-c); and
- a driving mechanism (16);
wherein the operating module (12, 13) and the driving mechanism (16) are configured to be arranged in a recess (20) of the machine, and wherein the driving mechanism (16) is controllable to move the operating module (12, 13) at least from a retracted position (P0) in which at least one operating element (14b, 14c) of the operating module (12, 13) is positioned within the recess (20) to an extended position (P1, P2, P3) in which the at least one operating element (14b, 14c) of the operating module (12, 13) is located outside of the recess (20).

2. Operating unit according to claim 1, wherein the driving mechanism (16) is controllable to move the operating module (12, 13) to at least one intermediate position (P1, P2) between the retracted position (P0) and the extended position (P3), wherein in the at least one intermediate position (P1, P2), at least one operating element (14b) is positioned outside of the recess (20) which in the retracted position (P0) is positioned inside of the recess (20), and wherein in the extended position (P3) at least one operating element (14c) more is positioned outside of the recess (20) than in the at least one intermediate position (P1, P2).

3. Operating unit according to claim 2, wherein the at least one intermediate position comprises a first intermediate position (P1) and a second intermediate position (P2), wherein the second intermediate position (P2) is positioned between the first intermediate position (P1) and the extended position (P3), and wherein in the second intermediate position (P2) at least one operating element (14c) more than in the first intermediate position (P1) and at least one operating element (30) less than in the extended position (P3) are located outside of the recess (20).

4. Operating unit according to any of the preceding claims, wherein the operating unit (10) comprises a cover element (36), wherein the cover element (36) is configured to cover in the retracted position (P0) an opening (22) of the recess.

5. Operating unit according to any of the preceding claims, wherein the one or more operating elements (14a-c, 30) comprise at least a joystick (30) having a base (32) and a handle (34) movably connected to the base (32), and wherein in the extended position (P3) of the operating module (12, 13), the joystick (30) is positioned at least partially outside of the recess (20) such that the handle (34) is pivotable in at least one direction.

6. Operating unit according to any of the preceding claims, wherein the operating module (12, 13) comprises a cover element (36) covering an end section (38) of the operating module (12, 13), wherein at least one of the operating elements (14a) is arranged on the cover element (36), and wherein, in the retracted position (P0) of the operating module (12, 13), the at least one operating element (14a) arranged on the cover element is positioned outside of the recess (20).

7. Operating unit according to any of the preceding claims, wherein the operating unit comprises a controller (68), and wherein the controller is configured to control the driving mechanism (16) to move the operating module (12, 13) selectively at least between the retracted position (P0) and the extended position (P1, P2, P3).

8. Operating unit according claim 7, wherein the controller (68) is configured to obtain an operation mode of the machine and to move the operating module (12, 13) to at least the retracted position (P0) or the extended position (P1, P2, P3) in dependence on the obtained operation mode.

9. Operating unit according to any of the preceding claims, wherein the operating unit (10) comprises a position detection arrangement (70) configured to detect, preferably contactless, the current position of the operating module (12, 13), in particular in a direction of the movement of the operating module (12, 13), and to transmit a position signal indicative of the detected position to a controller (68).

10. Operating unit according to any of claims 7 to 9, wherein the controller (68) is configured to move, in dependence on the detected position signal, the operating module (12, 13) to the retracted position (P0) or the extended position (P1, P2, P3).

11. Operating unit according to any of the preceding claims, wherein the driving mechanism (16) comprises a guiding arrangement (50) adapted to guide the operating module (12, 13) from the retracted position (P0) to the extended position (P1, P2, P3), and wherein preferably, the guiding arrangement (50) comprises at least two guiding elements (52) which, in a mounted state, extend parallel or substantially parallel to a direction of movement of the operating module (12, 13).

12. Operating unit according to any of the preceding claims, wherein the driving mechanism (16) comprises a driving element (64) driven by an actuator (56) and which is configured to be rotatably supported in the recess (20), and further comprises a driven element (66) arranged on the operating module (12, 13), the driving element (64) being in engagement with the driven element (66) such that by operating the actuator (56), the operating module (12, 13) is movable from the retracted position (P0) to the extended position (P1, P2, P3) by means of the driven element (66).

13. Operating unit according to claim 12, wherein the driving element is a threaded rod (64) or a gear and wherein the driven element is a threaded socket (66) or a rack, respectively.

14. Operating unit according to any of the preceding claims, wherein the driving mechanism (16) is self-retaining and/or is backlash-free.

15. A method of operating an operating unit (10) for controlling a function of a machine, in particular an operating unit (10) according to any of the preceding claims, wherein the operating unit comprises:
- an operating module (12, 13) comprising one or more operating elements (14); and
- a driving mechanism (16);
wherein the operating module and the driving mechanism (16) are arranged in a recess (20) of the machine,
wherein the method comprises:
moving, by means of the driving mechanism (16), the operating module (12, 13) from a retracted position (P0) in which at least one operating element (14b, 14c) of the operating module (12, 13) is positioned within the recess (20) to an extended position (P1, P2, P3) in which the at least one operating element (14b, 14c) of the operating module (12, 13) is located outside of the recess (20).
